# FASCICULE DE BREVET EUROPEEN

(11) **EP 1 205 883 B1**
(45) Date de publication et mention de la délivrance du brevet: **11.06.2008**
(21) Numéro de dépôt: 01402886.4
(22) Date de dépôt: 09.11.2001
(51) Int. Cl.: G07C 5/00, G01M 15/00

(54) **Dispositif et procédé d'aide au diagnostic d'un véhicule automobile**
Diagnostische Hilfsvorrichtung für ein Kraftfahrzeug und zugehöriges Verfahren
Motor vehicle diagnostic aid and method therefor

(30) Priorité: 10.11.2000 FR 0014471
(43) Date de publication de la demande: 15.05.2002
(73) Titulaire: RENAULT S.A.S., 92100 Boulogne Billancourt (FR)
(72) Inventeur: Dubois, Philippe, 75015 Paris (FR); Panday, Arjun, 75015 Paris (FR)

(56) Documents cités:
- EP-A- 0 949 122
- EP-A- 0 982 697
- DE-A- 19 650 047
- FR-A- 2 769 775
- US-A- 4 602 127
- US-A- 5 442 553
- US-A- 5 758 300
- US-A- 6 094 609

## Description

La présente invention concerne un dispositif d'aide au diagnostic réalisé sur un véhicule automobile, plus particulièrement au diagnostic des pannes électroniques et effectué à l'aide d'informations délivrées par des calculateurs et effectué par un central d'assistance à distance. Elle concerne également un procédé d'aide au diagnostic utilisant un tel dispositif.

Le domaine technique est celui du diagnostic des pannes des composants équipant les véhicules actuels, tels que les capteurs ou les différents calculateurs de contrôle moteur, d'habitacle ou du système d'antiblocage des roues - ABS - par exemple. Lorsque le véhicule tombe en panne, loin d'un garage équipé de moyens sophistiqués de dépannage, le dépanneur qui se déplace auprès du véhicule n'est généralement pas équipé d'une valise de diagnostic pour des raisons de coût. Il doit s'en remettre, pour les pannes électroniques, à un diagnostic approximatif que lui a communiqué auparavant un central d'assistance, qui a été contacté par le conducteur du véhicule. En effet, comme cela est décrit dans la demande de brevet français FR-A-2769775, déposée au nom de RENAULT; certains véhicules sont équipés d'un système d'urgence comprenant notamment un bouton d'appel d'urgence disponible sur le tableau de bord, qui permet au conducteur de contacter un central d'assistance situé à distance. L'opérateur du central d'assistance s'informe du problème, puis est capable d'établir un diagnostic à distance, par interrogation des calculateurs embarqués sur le véhicule, à partir de son poste de travail, comme cela est décrit dans la demande de brevet EP-A-1087343, déposée au nom de RENAULT. Ainsi, le diagnostic à distance permet d'identifier plusieurs causes possibles de la panne, qui sont alors communiquées à un dépanneur, le plus proche du véhicule. Bien que prévenu, ce dépanneur ne peut pas toujours effectuer la réparation nécessaire par manque d'informations provenant du central d'assistance et impossibilité d'effectuer lui-même le diagnostic sur place par manque de moyens performants.

Pour pallier ces inconvénients, l'invention propose au dépanneur d'accéder lui-même à un central d'assistance au dépannage par un appareil téléphonique portable grand public, par exemple un téléphone cellulaire, un ordinateur portable équipé d'un modem, un PDA communiquant - Personal Digital Assistant - comme un agenda électronique, ou un assistant personnel numérique, ou autre. Sur l'écran de son appareil de téléphonie mobile, l'utilisateur peut visualiser les résultats du télédiagnostic effectué par le central d'assistance, visualiser les documents techniques d'aide au dépannage ou bien encore piloter lui-même un télédiagnostic.

Pour cela, l'objet de l'invention est un procédé d'aide au diagnostic utilisant un dispositif d'aide au diagnostic d'un véhicule automobile, ledit véhicule étant équipé de capteurs et de calculateurs électroniques, ces derniers étant connectés par des moyens d'émission-réception à un central d'assistance à distance équipé de moyens de télédiagnostic, le central d'assistance à distance possédant un serveur Internet qui contient un programme accessible à distance et en ce que le dispositif d'aide comporte un appareil de téléphonie mobile détenu par un dépanneur et qui comprend des moyens de connexion au réseau Internet pour accéder au central d'assistance, des moyens d'accès aux résultats du télédiagnostic envoyés par le central, des moyens d'accès à des bases de données contenant des notes techniques, des moyens de commande d'un nouveau télédiagnostic du véhicule par le central d'assistance et des moyens de visualisation des résultats de télédiagnostic ou des notes techniques caractérisé en ce qu'il comporte les étapes suivantes :
- lors d'une première phase de télédiagnostic du véhicule par le central d'assistance appelé par l'utilisateur à la suite d'une panne :
   ■ diagnostic à distance ;
   ■ mémorisation dudit télédiagnostic dans un format exploitable par un appareil de téléphonie mobile ;
   ■ attribution d'un numéro d'identification de ce télédiagnostic ;
   ■ signalisation à un dépanneur, équipé d'un appareil de téléphonie mobile, d'une panne ainsi diagnostiquée ;
- lors d'une deuxième phase d'intervention dudit dépanneur sur le véhicule :
   ■ connexion de l'appareil de téléphonie mobile, via Internet, au central d'assistance ;
      - reconnaissance du type d'appareil de téléphonie mobile utilisé et envoi d'une page d'accueil à l'appareil mobile, par le central d'assistance ;
      - envoi d'un identifiant du dépanneur et sélection du lien « télédiagnostic » par ce dernier, puis envoi du numéro d'identification attribué au télédiagnostic lors de la première phase ;
      - visualisation du télédiagnostic envoyé par le central sur l'écran du téléphone mobile.

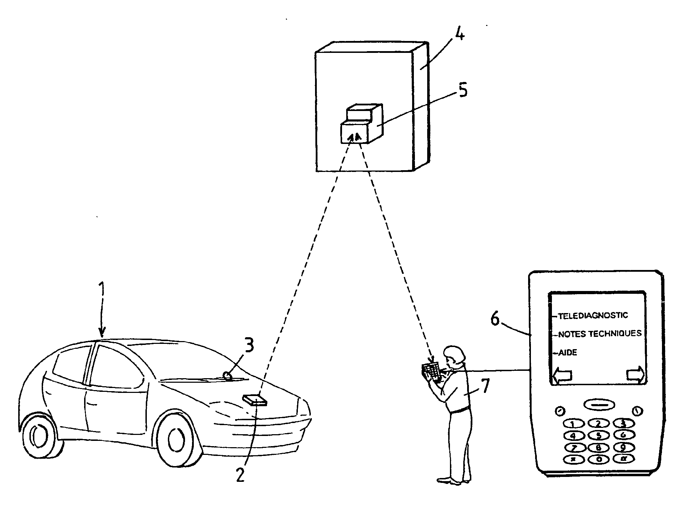

D'autres caractéristiques et avantages de l'invention apparaîtront à la lecture de la description d'un exemple de réalisation, illustrée par la figure unique qui est un schéma d'un dispositif d'aide au diagnostic utilisant un téléphone portable.

Le véhicule en panne 1 est équipé de capteurs et des calculateurs électriques 2, tels que le calculateur d'allumage-injection ou le calculateur d'ABS par exemple. Il est équipé également d'un système d'appel d'urgence, par un bouton 3 au tableau de bord, vers un central 4 d'assistance au dépannage. Lorsqu'une panne survient sur le véhicule, le conducteur appuie sur le bouton d'appel d'urgence et une connexion est alors établie entre le central 4 d'assistance et le véhicule.

Commence alors une première phase de télédiagnostic du véhicule, au cours de laquelle plusieurs causes probables sont identifiées. Après cette première étape d'établissement d'un diagnostic à distance, cette session est enregistrée dans un format exploitable par un appareil de téléphonie mobile, bas coût, par exemple XML - Extensible Markup Language -. Au moment de la connexion de l'appareil mobile, les données sont mises en forme en fonction de l'appareil mobile utilisé, par exemple en HTML - Hyper Text Markup Language - dans le cas d'un ordinateur portable, ou WML - Wireless Markup Language - dans le cas d'un téléphone ou d'un assistant personnel numérique, qui nécessitent des pages Internet optimisées pour les écrans de taille réduite. Cette deuxième étape est suivie de l'attribution d'un numéro d'identification de ce télédiagnostic. Puis, l'opérateur du central d'assistance appelle un dépanneur 7 et lui signale qu'une panne affecte un véhicule particulier. Cet appel se fait sur un appareil portable, de type PDA, téléphone cellulaire ou ordinateur portable équipé d'un modem par exemple.

Ce central d'assistance au dépannage comprend un serveur 5 Internet qui contient un programme accessible à distance par un logiciel de navigation sur le réseau Internet installé sur le téléphone mobile du dépanneur. Ce serveur Internet peut être un serveur WAP - Wireless Application Protocole - dans la version sans fil de l'Internet.

Lors de la deuxième phase d'intervention du dépanneur sur le véhicule, ce dernier peut vouloir avoir plus d'informations sur le diagnostic établi à distance par le central d'assistance. Par son appareil portable 6, il utilise le logiciel de navigation installé pour se connecter à Internet, et accéder au serveur du central d'assistance. Ce serveur reconnaît le type d'appareil utilisé par le dépanneur et lui envoie une page d'accueil en langage WML sur son écran de visualisation.

Le dépanneur inscrit sur cette page son identifiant personnel, qui aura dû être enregistré au préalable auprès du central d'assistance. Puis il sélectionne le lien « télédiagnostic » de son logiciel de navigation. Le serveur du central d'assistance lui renvoie une page de menu sur laquelle il entre le numéro d'identification du télédiagnostic, que l'opérateur du central lui avait communiqué oralement lors de l'appel.

Ayant identifié le problème, le central d'assistance envoie sur l'écran de visualisation du portable le déroulement du diagnostic préalablement réalisé.

En comparant ces informations avec l'état observé du véhicule, le dépanneur peut alors déterminer précisément l'origine de la panne, comme un garagiste équipé d'une valise de diagnostic électronique, et réparer le véhicule sur place.

Selon une autre caractéristique de l'invention, le procédé d'aide au diagnostic comporte une étape supplémentaire d'accès à des bases de données, contenant notamment des notes techniques et des informations d'assistance au dépannage propres au type de véhicule en panne. Pour cela, lorsque le dépanneur a choisi le lien « télédiagnostic » sur son logiciel de navigation, il sélectionne l'accès à une base de données par exemple, sur la page de menu renvoyée par le central d'assistance.

Selon une autre caractéristique, le procédé d'aide au dépannage comporte une autre étape de pilotage d'une nouvelle session de diagnostic à distance du véhicule par le dépanneur lui-même. Dans le cas où le dépanneur estime avoir besoin d'informations supplémentaires sur l'état du véhicule, il sélectionne, sur la page de menu du télédiagnostic, la commande d'une nouvelle connexion du serveur du central d'assistance avec le véhicule, avec envoi de nouvelles requêtes de diagnostic. Le central d'assistance exécute lui-même les commandes de diagnostic et envoie les résultats vers l'appareil portable du dépanneur dans le format lisible par celui-ci.

Les avantages de ce procédé résident dans le fait que le dépanneur a accès à des informations de diagnostic comme à des bases de données d'aide au dépannage, au même titre que les garagistes équipés de moyens sophistiqués de diagnostic. En se connectant à un serveur central, de la marque du véhicule en panne notamment, il peut obtenir des informations détaillées sur le télédiagnostic préalablement établi, consulter des documents d'assistance et demander une nouvelle procédure de diagnostic à distance depuis un simple appareil de téléphonie mobile grand public. Le pourcentage de réparations effectuées sur le lieu de pannes va ainsi s'accroître et le service à la clientèle en sera amélioré en qualité et efficacité.

Le dépanneur peut également accéder à des fonctionnalités supplémentaires, telles que l'accès au tarif des pièces de rechange pour effectuer par exemple un devis sur place, ou la réservation d'un hôtel à proximité dans le cas d'une panne plus sérieuse immobilisant plus longtemps le véhicule. Toutes ces fonctionnalités seraient pilotables depuis l'appareil de téléphonie mobile grâce à des pages de menu générées par le central d'assistance.

## Revendications

1. Procédé d'aide au diagnostic d'un véhicule automobile utilisant un dispositif d'aide au diagnostic d'un véhicule automobile, ledit véhicule étant équipé de capteurs et de calculateurs électroniques, ces derniers étant connectés par des moyens d'émission-réception à un central d'assistance à distance équipé de moyens de télédiagnostic, le central (4) d'assistance à distance possédant un serveur Internet (5) qui contient un programme accessible à distance, ledit dispositif comportant un appareil de téléphonie mobile (6) détenu par un dépanneur (7) et comprenant des moyens de connexion au réseau Internet pour accéder au central, des moyens d'accès aux résultats du télédiagnostic envoyés par ledit central, des moyens d'accès à des bases de données contenant des notes techniques, des moyens de commande d'un nouveau télédiagnostic du véhicule par le central et des moyens de visualisation des résultats dudit télédiagnostic ou des notes techniques, **caractérisé en ce que** ledit procédé comporte les étapes suivantes :
- lors d'une première phase de télédiagnostic du véhicule par le central d'assistance appelé par l'utilisateur à la suite d'une panne :
■ diagnostic à distance ;
■ mémorisation dudit télédiagnostic dans un format exploitable par un appareil de téléphonie mobile ;
■ attribution d'un numéro d'identification de ce télédiagnostic ;
■ signalisation à un dépanneur équipé d'un appareil de téléphonie mobile, d'une panne ainsi diagnostiquée ;
- lors d'une deuxième phase d'intervention dudit dépanneur sur le véhicule :
■ connexion de l'appareil de téléphonie mobile au réseau Internet, pour accéder au central d'assistance ;
■ reconnaissance du type d'appareil de téléphonie mobile utilisé et envoi d'une page d'accueil à l'appareil mobile, par le central d'assistance ;
■ envoi d'un identifiant du dépanneur et sélection du lien « télédiagnostic » par ce dernier, puis envoi du numéro d'identification au télédiagnostic lors de la première phase ;
■ visualisation du télédiagnostic envoyé par le central sur l'écran du téléphone mobile.

2. Procédé d'aide au diagnostic d'un véhicule automobile utilisant un dispositif selon la revendication 1, **caractérisé en ce qu'il** comporte une étape supplémentaire d'accès à des bases de données, contenant notamment des notes techniques et des informations d'assistance au dépannage, par sélection sur la page de menu renvoyée par le central d'assistance, lorsque le dépanneur a choisi le lien « télédiagnostic » sur son logiciel de navigation au réseau Internet donnant accès au central.

3. Procédé d'aide au diagnostic d'un véhicule automobile utilisant un dispositif selon la revendication 1, **caractérisé en ce qu'il** comporte une étape supplémentaire, lors de la connexion de l'appareil de téléphonie mobile du dépanneur au central d'assistance, de commande d'une nouvelle procédure de diagnostic à distance du véhicule réalisée par le central et pilotée par le dépanneur lui-même par envoi de requêtes particulières de diagnostic, suivie d'une étape de visualisation des résultats de ce nouveau télédiagnostic envoyés par le central dans le format lisible par l'appareil de téléphonie mobile.

## Claims

1. Method of aiding motor vehicle diagnosis using a device for aiding motor vehicle diagnosis, the said vehicle being equipped with sensors and with electronic computers, the latter being connected by send-receive means to a remote assistance centre equipped with telediagnosis means, the remote assistance centre (4) possessing an Internet server (5) which contains a remotely accessible program, the said device comprising a mobile telephone apparatus (6) in the possession of a fault repairman (7) and comprising means for connecting to the Internet network to access the centre, means for accessing the telediagnosis results dispatched by the said centre, means for accessing databases containing technical notes, means for instructing a new telediagnosis of the vehicle by the centre and means for viewing the results of the said telediagnosis or technical notes, **characterized in that** the said method comprises the following steps:
- during a first phase of telediagnosis of the vehicle by the assistance centre called by the user subsequent to a fault:
• remote diagnosis;
• storage of the said telediagnosis in a format utilizable by a mobile telephone apparatus;
• allocation of an identification number for this telediagnosis;
• signalling to a fault repairman equipped with a mobile telephone apparatus, of a fault thus diagnosed;
- during a second phase of intervention of the said fault repairman on the vehicle:
• connection of the mobile telephone apparatus to the Internet network, to access the assistance centre;
• recognition of the type of mobile telephone apparatus used and dispatching of a home page to the mobile apparatus, by the assistance centre;
• dispatching of an identifier of the fault repairman and selection of the "telediagnosis" link by the latter, then dispatching of the identification number to the telediagnosis during the first phase;
• viewing of the telediagnosis dispatched by the centre on the screen of the mobile telephone.

2. Method of aiding motor vehicle diagnosis using a device according to Claim 1, **characterized in that** it comprises an additional step of accessing databases, containing in particular technical notes and information for assisting with fault repair, by selection on the menu page returned by the assistance centre, when the fault repairman has chosen the "telediagnosis" link on his navigation software to the Internet network affording access to the centre.

3. Method of aiding motor vehicle diagnosis using a device according to Claim 1, **characterized in that** it comprises an additional step, upon connecting the mobile telephone apparatus of the fault repairman to the assistance centre, of instructing a new procedure for remote diagnosis of the vehicle carried out by the centre and controlled by the fault repairman himself by dispatching particular diagnosis queries, followed by a step of viewing the results of this new telediagnosis that are dispatched by the centre in the format readable by the mobile telephone apparatus.

## Patentansprüche

1. Hilfsverfahren zur Diagnose eines Kraftfahrzeugs, das eine Hilfsvorrichtung zur Diagnose eines Kraftfahrzeugs verwendet, wobei das Fahrzeug mit elektronischen Sensoren und Rechnern ausgestattet ist, wobei letztere über Sende-Empfangs-Mittel mit einer Fernassistenz-Zentrale verbunden sind, die mit Ferndiagnosemitteln ausgestattet ist, wobei die Fernassistenz-Zentrale (4) einen Internet-Server (5) besitzt, der ein aus der Ferne zugängliches Programm enthält, wobei die Vorrichtung ein Mobiltelefon (6) aufweist, das sich im Besitz eines Pannendiensts (7) befindet, und Mittel zur Verbindung mit dem Internet, um auf die Zentrale zuzugreifen, Zugangsmittel zu den Ergebnissen der Ferndiagnose, die von der Zentrale gesendet werden, Zugangsmittel zu Datenbanken, die technische Informationen enthalten, Mittel zur Steuerung einer neuen Ferndiagnose des Fahrzeugs durch die Zentrale und Mittel zur Anzeige der Ergebnisse der Ferndiagnose oder der technischen Informationen umfasst, **dadurch gekennzeichnet, dass** das Verfahren die folgenden Schritte aufweist:
- während einer ersten Phase der Ferndiagnose des Fahrzeugs durch die Assistenz-Zentrale, die vom Benutzer nach einer Panne angerufen wird:
• Ferndiagnose;
• Speichern der Ferndiagnose in einem von einem Mobiltelefon nutzbaren Format;
• Zuweisung einer Identifikationsnummer dieser Ferndiagnose;
• Mitteilung einer so diagnostizierten Panne an einen Pannendienst, der mit einem Mobiltelefon ausgestattet ist;
- während einer zweiten Phase des Eingreifens des Pannendiensts am Fahrzeug:
• Verbindung des Mobiltelefons mit dem Internet, um auf die Assistenz-Zentrale zuzugreifen;
• Erkennung des Typs des verwendeten Mobiltelefons und Senden einer Startseite an das Mobiltelefon durch die Assistenz-Zentrale;
• Senden einer Kennung des Pannendiensts und Auswahl des "Ferndiagnose"-Links durch diesen letzteren, dann Senden der Ferndiagnose-Identifikationsnummer der ersten Phase;
• Anzeige der von der Zentrale gesendeten Ferndiagnose auf dem Bildschirm des Mobiltelefons.

2. Hilfsverfahren zur Diagnose eines Kraftfahrzeugs, das eine Vorrichtung nach Anspruch 1 verwendet, **dadurch gekennzeichnet, dass** es einen zusätzlichen Schritt des Zugriffs auf Datenbanken aufweist, die insbesondere technische Informationen und Pannenhilfeinformationen enthalten, durch Auswahl auf der Menüseite, die von der Assistenz-Zentrale zurückgeschickt wird, wenn der Pannendienst das "Ferndiagnose"-Link in seiner Internet-Navigationssoftware gewählt hat, die den Zugang zur Zentrale gewährt.

3. Hilfsverfahren zur Diagnose eines Kraftfahrzeugs, das eine Vorrichtung nach Anspruch 1 verwendet, **dadurch gekennzeichnet, dass** es bei der Verbindung des Mobiltelefons des Pannendiensts mit der Assistenz-Zentrale einen zusätzlichen Schritt der Steuerung einer neuen Ferndiagnoseprozedur des Fahrzeugs aufweist, die von der Zentrale durchgeführt und vom Pannendienst selbst durch Senden von besonderen Diagnoseanforderungen gesteuert wird, gefolgt von einem Schritt der Anzeige dieser neuen Ferndiagnose, die von der Zentrale in dem vom Mobiltelefon lesbaren Format gesendet wird.
